# EUROPEAN PATENT APPLICATION

(11) **EP 1 311 133 A2**
(43) Date of publication of application: **14.05.2003**
(21) Application number: 02019946.9
(22) Date of filing: 05.09.2002
(51) Int. Cl.: H04Q 3/00, H04M 7/00

(54) **Integrated gateway functionality in an access network element**

(30) Priority: 02.11.2001 US 52846
(71) Applicant: ALCATEL, 75008 Paris (FR)
(72) Inventor: Collins, Thorton, Petaluma, California 94954 (US); Franceschini, Paul, Petaluma, California 94952 (US); Hassan-Ali, Mudhafar A., Rohnert Park, California 94928 (US); Hu, Jie, Santa Rosa, California 95409 (US); Kujoory, Ali, Petaluma, California 94954 (US); Mendelson, Jeff, Petaluma, California 94954 (US); Michielsen, Peter, Petaluma, California 94954 (US); Torrey, Wayne, San Jose, CA 95120 (US)
(74) Representative: Dreiss, Fuhlendorf, Steimle & Becker

(57) **Abstract**

A solution for providing integrated gateway functionality (603) in an access network element (602) by way of a broadband resource card, which access network element (602) is deployed in an access network coupled to a first network domain (604,606,608) and a second network domain (604,606,608). A structure is included for providing signaling functionality (605A) operable to replace a first network connection operating in the first network domain with a second network connection operating in the second network domain. A media converter (605B) integrated with the signaling functionality structure is operable to convert between the two media of the network domains.

## Description

### BACKGROUND OF THE INVENTION

### Technical Field of the Invention

The present invention generally relates to telecommunications. More particularly, and not by way of any limitation, the present invention is directed to a system and method for providing integrated gateway functionality in a node deployed in an access network coupled to one or more communication network domains

### Description of Related Art

The remote access market is undergoing a major metamorphosis. Three factors serve as catalysts for change. The first is the growing number of users, for example, small office / home office (SOHO) users, demanding high performance Internet and remote access for multimedia. Liberalized governmental activity with respect to telecommunications is another factor, which is fostering broader competition through deregulation in local area markets everywhere. The third and final factor is congestion in the Public Switched Telephone Network (PSTN), originally designed and developed for voice-only traffic.

There have been several important advances in telecommunications technology that enable high rates of throughput in carrier networks' backbone connections. For example, by implementing Asynchronous Transfer Mode (ATM) networking technology over a Synchronous Optical Network (SONET) / Synchronous Digital Hierarchy (SDH) physical layer, carrier networks can achieve data rates of up to several hundred megabits per second (Mbps). However, efforts to meet the bandwidth demand for remote access have been beset by the limitations of the existing twisted-pair copper cable infrastructure (i.e., access network) provided between a carrier's central office (CO) and a subscriber's remote site, typically referred to as the local loop. In the telecommunications art, these limitations are sometimes collectively described as the "last-mile" problem.

Current access network solutions that attempt to avoid the bottleneck created by the last-mile problem involve the use of fiber optic technology in the local loop also. As with the high-speed carrier networks, the fiber-based local loop infrastructure is typically architected using SONET as the physical layer technology. With recent developments in optical components and related optoelectronics, in addition to improvements in network design, broadband access is now becoming commonplace.

Moreover, coupled with the phenomenal growth in popularity of the Internet, there has been a tremendous interest in using packet-switched network (PSN) infrastructures (e.g., those based on Internet Protocol (IP) addressing) as a replacement for the existing circuit-switched network (CSN) infrastructures used in today's telecommunications networks. From the network operators' perspective, the inherent traffic aggregation in packet-switched infrastructures allows for a reduction in the cost of transmission and the infrastructure cost per end-user. Ultimately, such cost reductions enable the network operators to pass on the concomitant cost savings to the end-users.

Accordingly, a new breed of service-centric networks (distinct from the existing voice-centric and data-centric networks) are being explored for implementation on what is known as the next-generation network (NGN) infrastructure, where integrated voice/data/video applications may be provisioned using a packet transport over a packet network in an end-to-end transmission path. As alluded to hereinabove, it is believed that using a packet network infrastructure in access networks provides higher transmission efficiency, lower operation and maintenance costs, and a unified access.

Whereas traditional access systems allow accessing a digital local voice switch, such as a Class 5 switch, by extending a plurality of metallic loops and aggregating them in a bundle for efficiently transmitting the time-division multiplexed (TDM) voice traffic, interoperability with packet switches is required in NGN-based access infrastructures. Accordingly, a gateway structure is needed in the access network whereby the TDM traffic is converted to a packet stream for transmission over a packet network.

In accordance with one existing approach, the requisite gateway functionality can be implemented as a separate piece of equipment deployed in the access network. In yet another approach, the functionality may be integrated with an access switch of the packet network. Although these solutions may be advantageous in some applications, they are nevertheless beset with several problems. First, where separate stand-alone gateway equipment is required in an access network, it would not be acceptable for many network operators because of the additional maintenance and operation, extra space, et cetera. The increased cost structure would be particularly inefficient where only smaller line sizes are supported. On the other hand, integrating the gateway functionality within the packet network also requires additional outlays because the access network operator is forced to purchase expensive packet switch equipment.

### SUMMARY OF THE INVENTION

Accordingly, the present invention advantageously provides a solution which implements integrated gateway functionality in an existing access network element by way of a broadband resource card that can be incrementally added on an as-needed basis. As a result, the need for expensive additional equipment, e.g., stand-alone gateway equipment in the access network or separate packet switch equipment with gateway functionality, is obviated.

Preferably, the access network element is deployed in an access network coupled to a first network domain and a second network domain. The network domains may comprise a TDM network, an ATM or IP network, etc. A structure is included for providing signaling functionality operable to replace a first network connection operating in the first network domain with a second network connection operating in the second network domain, which signaling functionality is preferably operable in conjunction with a signaling protocol (e.g., Megaco) under the control of a softswitch. A media converter integrated with the signaling functionality structure is operable to convert between the two media of the network domains.

In one aspect, the present invention is directed to an integrated access media gateway system operable in conjunction with an access network element. A formatter interface is included for generating raw TDM information based on analog voice information received in a plurality of channels over a bus. A signal processing assembly is operably coupled to the formatter interface for processing the raw TDM information into processed TDM information. A packet engine is provided for packetizing the processed TDM information into a plurality of packets under a host processor's control. The host processor is operable, preferably in conjunction with a multimedia-capable call server such as a softswitch, to provide necessary control signaling information for setting up at least one packet-switched session based on channel associated signaling (CAS) information relating to the TDM stream. Further, the packet engine operates to aggregate the packets into a transport medium using, for example, appropriate ATM Adaptation Layers (AAL1-AAL5), which medium is operable with a packet-switched network (PSN) through a packet interface.

In another aspect, the present invention is directed to a broadband resource card for providing integrated access media gateway functionality in an access network element. A formatter is provided for converting information received over a plurality of channels in a first network domain into raw TDM information. A digital signal processing (DSP) array is coupled to the formatter for processing the raw TDM information into processed TDM information. A packet engine operating responsive to a host processor is provided for packetizing the processed TDM information into a second network medium. Control signaling for setting up packet-switched sessions is provided by the host processor based on channel associated signaling relating to the TDM channels.

### BRIEF DESCRIPTION OF THE DRAWINGS

A more complete understanding of the present invention may be had by reference to the following Detailed Description when taken in conjunction with the accompanying drawings wherein:

FIG. 1 depicts an exemplary telecommunications network arrangement having an access network portion wherein the teachings of the present invention may be advantageously practiced;

FIG. 2 depicts a high level conceptualization of an access network portion involving a loop carrier in conjunction with a central office;

FIG. 3 depicts an exemplary embodiment of a loop carrier system having a plurality of nodes (or, terminals) wherein integrated gateway functionality may be provided in a terminal in accordance with the teachings of the present invention;

FIG. 4 depicts an exemplary loop carrier system where an access media gateway is provided in a central office terminal (COT);

FIG. 5 depicts an exemplary loop carrier system where an access media gateway is provided in a remote terminal (RT);

FIG. 6 depicts a high level network configuration having the access network node of the present invention for providing integrated gateway functionality between any two networks;

FIG. 7 depicts a high level functional block diagram of a portion of the access network terminal exemplifying various interfaces in addition to a gateway resource card;

FIG. 8A depicts a high level functional block diagram of an exemplary embodiment of the gateway resource card of the present invention, wherein the line concentration function is within the resource card;

FIG. 8B depicts a high level functional block diagram of another exemplary embodiment of the gateway resource card of the present invention, wherein the line concentration function is outside the resource card;

FIG. 9A depicts an exemplary integrated access media gateway system operable in an access network element in accordance with the teachings of the present invention, wherein gateway cards stratified into primary and secondary levels are illustrated;

FIG. 9B depicts another exemplary integrated access media gateway system operable in an access network element in accordance with the teachings of the present invention, wherein a plurality of peer-level gateway cards are illustrated; and

FIG. 10 is a flow chart of the various steps involved in an exemplary methodology for providing integrated access media gateway functionality between analog voice-over-TDM and voice-over-packet domains in accordance with the teachings of the present invention.

### DETAILED DESCRIPTION OF THE DRAWINGS

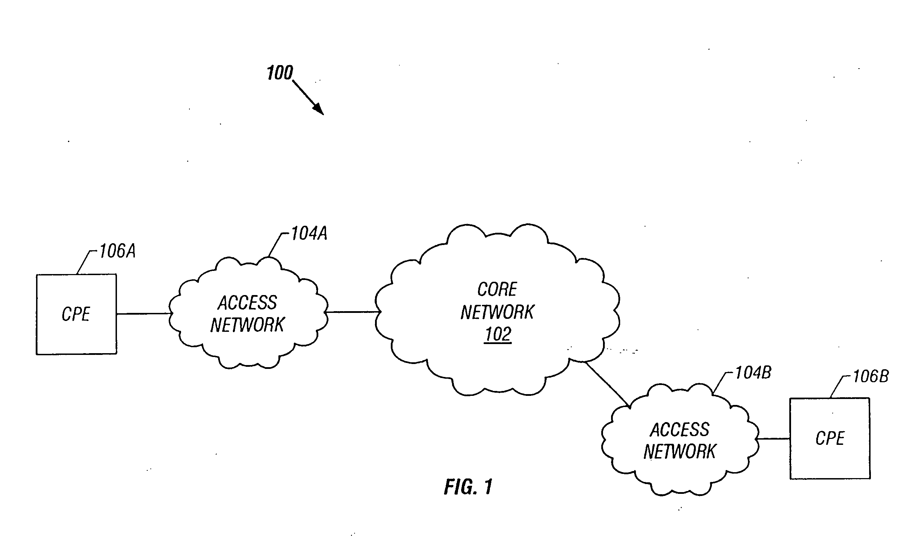

In the drawings, like or similar elements are designated with identical reference numerals throughout the several views thereof, and the various elements depicted are not necessarily drawn to scale. Referring now to FIG. 1, depicted therein is an exemplary network arrangement 100 having one or more access network portions, wherein the teachings of the present invention may be advantageously practiced for providing integrated gateway functionality in an access network element. The exemplary network arrangement 100, comprising a core transport network 102 and access network portions 104A and 104B, is preferably operable to support telecommunications, data communications, or any combination thereof involving diverse media such as voice, audio, video, graphics, data, and assorted multimedia. The core transport network 102 may be provisioned as a circuit-switched network (CSN), packet-switched network (PSN), or an integrated hybrid network capable of next-generation network (NGN) service infrastructure. In an exemplary embodiment, the Public Switched Telephony Network (PSTN) (for wireline communications), the Public Land Mobile Network (PLMN) (for wireless communications), or any combination thereof may be provided as the CSN. Where the core network 102 is implemented as a packet network, it may preferably be comprised of a network operable with Internet Protocol (IP), Frame Relay, ATM, and/or other applicable technologies.

The access network portions 104A and 104B are deployed between end users (i.e., subscribers) exemplified by customer premises equipment (CPE) 106A, 106B, and the core network 102. It should be appreciated that although isolated CPE units are illustrated in this FIG., they may also be deployed in a private network such as a home area network (HAN), customer premises network (CPN), or a premises distribution network (PDN). Furthermore, the CPE units may be comprised of any known or heretofore unknown Integrated Access Devices (IADs) operable with diverse media. The access network portions 104A, 104B are operable to provide remote access to the subscribers by means of various Point-of-Interface (POI) nodes and Point-of-Presence (POP) nodes interconnected via any suitable wireline, wireless, narrowband, or broadband local network. By way of example, such a local network may be implemented using well known technologies such as the Integrated Services Digital Network (ISDN), Digital Subscriber Line (DSL) and its variants, Fiber In The Loop (FITL) and its variants, Hybrid Fiber/Coaxial (HFC) cable technologies, or Wireless Local Loop (WLL) technologies. Additionally, the exemplary access network portions 104A and 104B may be comprised of a converged local network in further embodiments of the present invention.

In a presently preferred exemplary embodiment of the present invention, the access network portion (e.g., access network 104A or 104B) is provided as a fiber-based loop carrier system that can be implemented in various embodiments depending on cost, availability of appropriate local infrastructure, services supported, etc. For example, implementations such as Fiber To The Home (FTTH), Fiber To The Curb (FTTC), Fiber To The Neighborhood (FTTN), and other FITL variants may be architected as a digital loop carrier (DLC) for providing integrated, broadband access services to the subscribers.

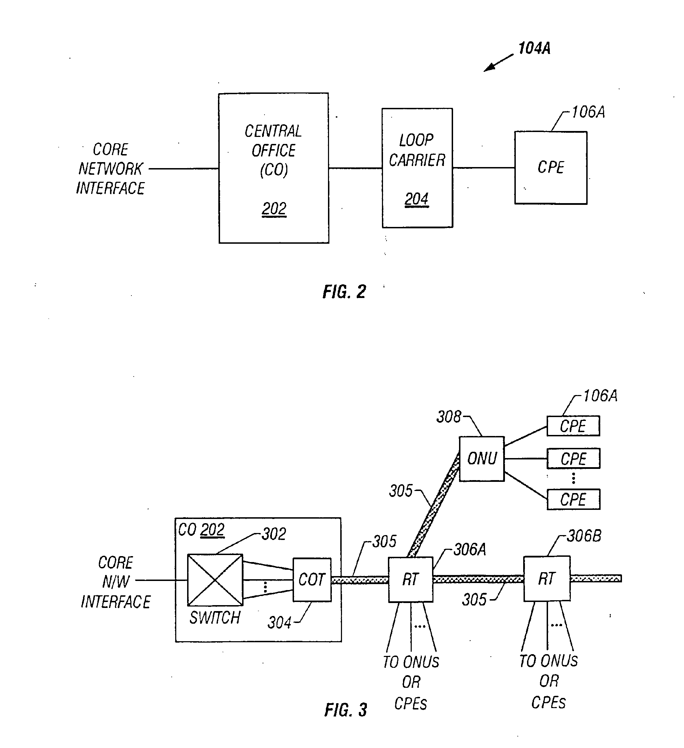

The fiber-based loop carrier system is preferably at least operable with a suitable physical layer infrastructure such as the Synchronous Optical Network (SONET) technology or its companion, the Synchronous Digital Hierarchy (SDH), which is similar to SONET except that its multiplexing hierarchy is a subset of the SONET multiplexing scheme. FIG. 2 depicts a high level conceptualization of the exemplary access network portion (e.g., access network 104A) involving a loop carrier 204 in conjunction with a central office (CO) 202. An exemplary IAD, for instance CPE 106A, is coupled to the loop carrier 204 operable to multiplex the access loop signal between the equipment and the CO with other loop signals. The POI equipment located at the CO is operable, in turn, to provide interface connectivity to the core network.

Referring now to FIG. 3, depicted therein is an exemplary embodiment of a fiber-based loop carrier system having a plurality of nodes wherein integrated gateway functionality may be provided in a node in accordance with the teachings of the present invention. The loop carrier nodes, which may also be referred to as access network nodes or terminals (more generically, telecommunications nodes), may be organized in one of several topologies for purposes of the present invention and are comprised of two forms depending on their location in the access loop. When co-located at a CO, the loop carrier node is referred to as a central office terminal (COT). Reference numeral 304 exemplifies a COT coupled to a CO switch 302 that forms part of CO 202. Other loop carrier nodes external to the CO are referred to as remote terminals (RTs), e.g., RT 306A and 306B.

Fiber paths 305, preferably operable to carry signals of OC-3 or higher rates, are used for interconnecting the COT and RTs in a particular topology. Where only one RT is coupled to the COT, the resultant two-node arrangement is referred to as a point-to-point loop carrier system. On the other hand, if multiple RTs are coupled in a linear fashion, either a single feeder multiple RT (MRT) system or a dual feeder MRT system may be obtained. In a single feeder MRT system, the RTs are located on only one side of the COT, as exemplified in this FIG. In the dual feeder MRT system, the RTs are deployed on both sides of the COT. In a further exemplary embodiment, the loop carrier system may be arranged in a ring topology.

Regardless of the particular topological configuration used for implementing a DLC, either the COT, RTs, or both may be provided with the capability to concentrate the total access lines connected thereto. That is, the total number of lines to which a terminal is connected may be greater than the maximum number of active lines supported by it. Accordingly, each terminal may have its own concentration ratio (which is the ratio between the total number of connection lines and the maximum number of active lines supported by the terminal).

In addition to the COT and RT access loop nodes, the exemplary loop carrier system may also include other equipment such as Optical Network Units (ONUs) that serve end users that are far enough away from each other that it isn't economical to connect all of them to an RT. The ONUs are operable to convert the signals between electrical and optical domains, if necessary. Also, the ONUs digitize the analog communication signals from a plurality of customers and multiplex them onto a piece of fiber coupled to the RT. In FIG. 3, reference numeral 308 refers to an ONU that is coupled to RT 306A and serves, by way of example, IAD/CPE 106A. Further, an RT in the loop carrier system may be coupled to one or more ONUs and RTs, in addition to the CPEs directly served by the RT.

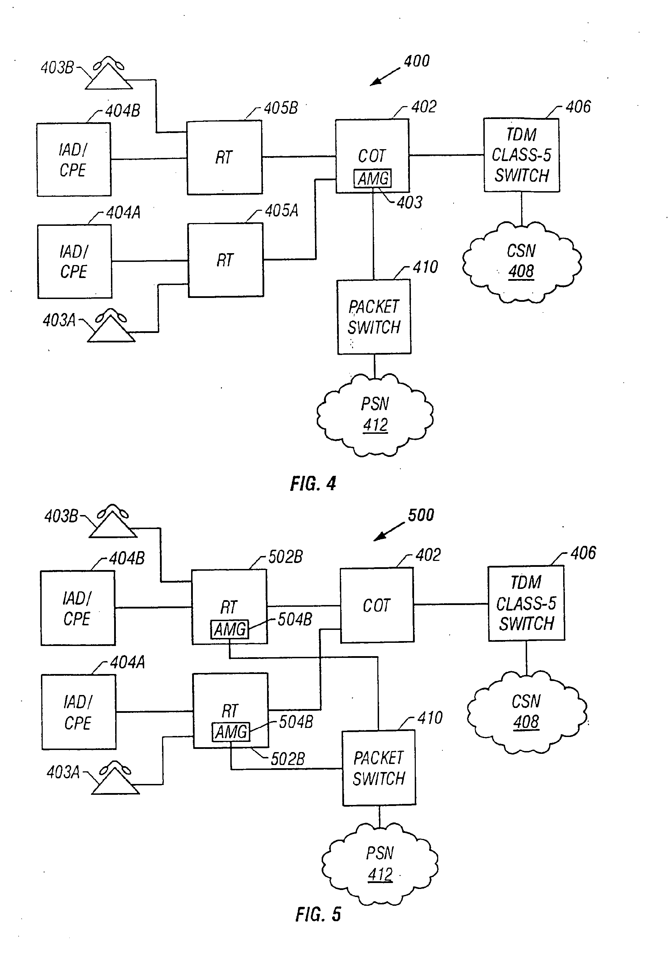

FIG. 4 depicts an exemplary loop carrier system 400 wherein an integrated gateway 403 is provided in a COT 402. As described in detail hereinabove, COT 402 provides connectivity to a conventional Class 5 switch 406 operable with time-division multiplexed (TDM) communication data, which TDM switch 406 is connected to a CSN 408. Further, IAD/CPE 404A and 404B are illustrative CPE units coupled to respective RTs 405A, 405B which in turn are coupled to COT 402 in any topology. Also, exemplary POTS equipment 403A and 403B is coupled to respective RTs. In the network configuration shown in FIG. 4, both COT and RTs may be provided with the capability to perform concentration.

The integrated access gateway 403 of the present invention is preferably capable to provide a signaling function as well as a media conversion function between any two network domains. As exemplified herein, the gateway is capable of replacing a circuit-switched connection with an appropriate session over a packet network, e.g., PSN 412 coupled to COT 403 via a packet switch 410, preferably under the control of a multimedia-capable call server such as a softswitch (not shown in this FIG.). As part of the media conversion functionality, the gateway is operable to take the outgoing voice/TDM traffic from the DLC and convert it into a packet stream towards the PSN, and take the incoming packet stream from the PSN and convert it to TDM traffic towards the local users. Accordingly, it is useful to conceptualize the integrated gateway 403 as an access/media gateway (AMG) which, as will be described in greater detail hereinbelow, is architected as a network resource card operable to be disposed in the terminal.

FIG. 5 depicts an exemplary loop carrier system 500 where an access media gateway is provided in an RT. Similar to the loop carrier arrangement shown in FIG. 4, COT 402 is conventionally interfaced with TDM switch 406 for connectivity with the CSN 408. Each exemplary RT, i.e., RT 502A and RT 502B, is provided with an AMG for effectuating the gateway functionality such that the RT is capable of interfacing directly to the PSN 412 via the packet switch 410. Reference numerals 504A and 504B are illustrative of the RT-based AMGs in this exemplary embodiment. Accordingly, COT 402 does not have any interfaces to the PSN. Also, RTs - rather than the COT - are responsible in this exemplary embodiment for performing concentration with respect to both packet traffic as well as TDM traffic.

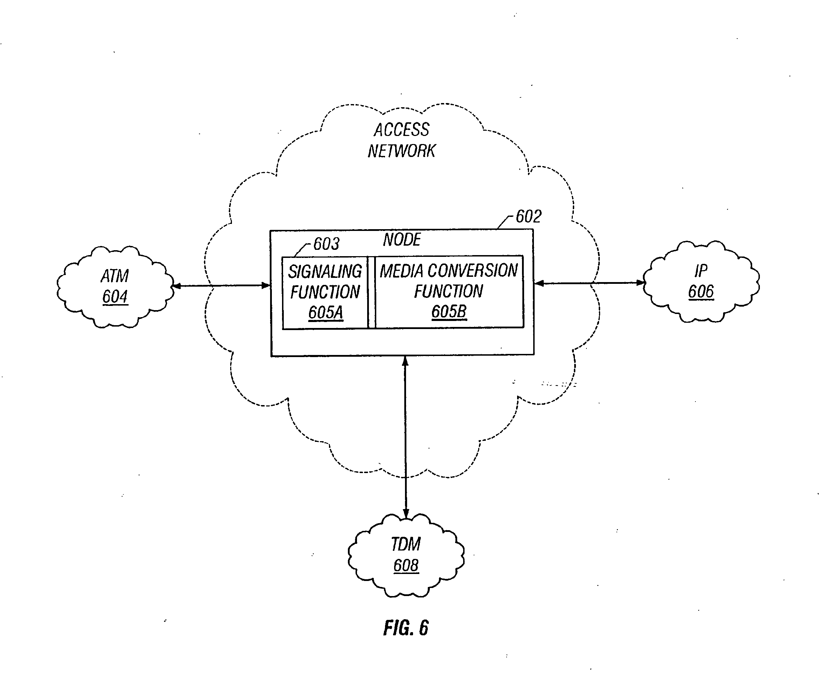

Referring now to FIG. 6, depicted therein is a high level network configuration having the access network node 602 of the present invention for providing integrated gateway functionality between any two network domains. The access network node 602 may operate as a COT or an RT depending upon where it is deployed in an access network such as the access networks 104A/104B described hereinabove. By way of example, three network domains are interconnected with the access network: an ATM network 604, an IP network 606 and a TDM network 608. The integrated access media gateway 603 comprises a structure 605A for providing appropriate signaling functionality to replace any network connection operable with one network domain with another network connection operable with a second network domain. Also, a media conversion structure 605B integrated therewith is operable to convert between any two media (one functioning in one network domain and the other in a second network domain). Accordingly, the integrated AMG structure 603 advantageously provides gateway functionality between, for example, voice-over-TDM and voice-over-packet domains, two packet voice domains, between packet voice and analog voice domains, etc.

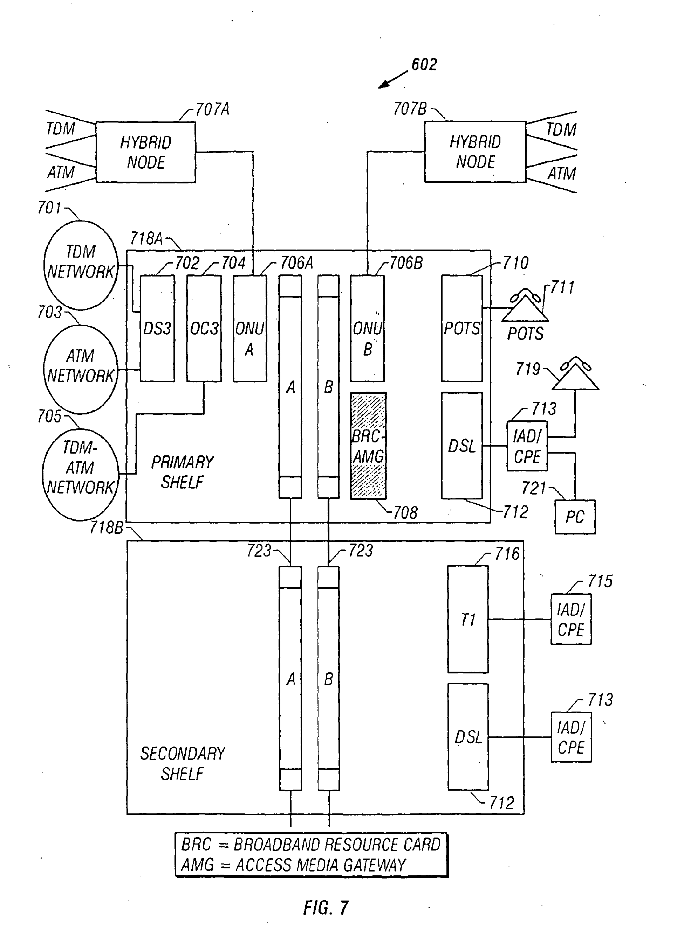

In one exemplary embodiment, the access network node 602 may be provided as a scalable stack of a plurality of shelves or channel banks, which include a primary shelf and a number of secondary shelves disposed both above and below the primary shelf, wherein the various secondary shelves are coupled to the primary shelf via an interconnection mechanism that includes appropriate inter-shelf interfacing involving the network domains to which the access node is coupled. Referring now to FIG. 7, therein is depicted a high level functional block diagram of a portion of the access network node 602 exemplifying a plurality of interfaces in addition to a gateway resource card having the integrated signaling and media conversion functionalities described hereinabove. Preferably, such integrated functionality is provided as a system implemented on one or more broadband resource cards (BRCs) disposed in the primary shelf 718A. Reference numeral 708 refers to a BRC-AMG card which will be described in greater detail hereinbelow. An exemplary secondary shelf 718B is coupled to the primary shelf 718A via inter-shelf interfaces 723.

Among the exemplary network interfaces provided in the primary shelf 718A are a DS3 interface 702 operable with a TDM network 701 and an ATM network 703; an OC3 interface 704 operable with a TDM/ATM network 705; and optical line units (OLUs) 706A and 706B operable with hybrid nodes 707A and 707B, respectively. Exemplary subscriber interfaces in the primary shelf 718A include a POTS interface operable with conventional telephone equipment 711 and a DSL interface 712 operable with appropriate IAD/CPE 713 comprising derived POTS equipment 719 and one or more computers 721. The secondary shelf 718B is exemplified with a T1 interface 716 operable with IAD/CPE 715 and a DSL interface operable with IAD/CPE 713. For the sake of simplicity, other subsystems such as alarm units, power supplies, et cetera, associated with the shelves are not shown in this FIG.

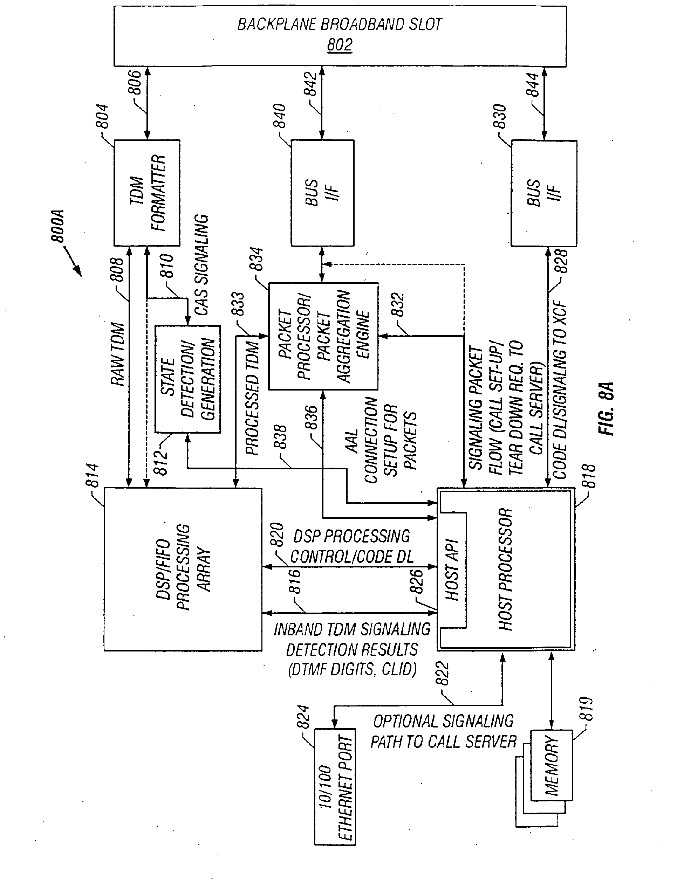

FIG. 8A depicts a high level functional block diagram of an exemplary gateway resource card 800A of the present invention, wherein the concentration is done at the resource card itself rather than in the XCF of the node in which the resource card is deployed. As alluded to in the foregoing description, the resource card 800A is preferably provided as a BRC suitably disposed in the access network element, e.g., in a primary shelf, secondary shelf, or otherwise. Accordingly, the resource card 800A is interfaced to a backplane broadband slot 802 via a plurality of interfaces. An TDM formatter 804 is coupled to the broadband slot 802 via a bus 806 operable to provide a TDM/voice traffic interface. The formatter 804 is operable to convert between raw TDM traffic and appropriate voice information disposed on the bus 806 in a plurality of channels. To facilitate media conversion, raw TDM information is first provided to a processing array/assembly 814 via path 808 for converting raw TDM information into processed TDM information. Preferably, a digital signal processing (DSP) array or assembly coupled with appropriate first-in-first-out (FIFO) stacks may be employed for processing the TDM information. In further exemplary embodiments of the present invention, any conventional generic processor may also be used for TDM processing upon programming it suitably.

A state detection/generation block 812 is coupled to the TDM formatter via path 810 for detecting channel associated signaling (CAS) information in the TDM traffic supported by the traffic channels of the resource card 800A. A packet engine 834 receives the processed TDM information via path 833 for packetizing the TDM information into a plurality of packets that can be packaged into a suitable transport medium. A host processor 818 is coupled via an application programming interface (API) 826 to the signal processing array 814 and the packet engine 834 for providing overall control with respect to packet aggregation, signaling, call setup and tear down (i.e., session control), and the like. Accordingly, the host processor 818 communicates with the signal processing array 814 via path 816 with respect to in-band TDM signaling, DTMF digits, etc. DSP processing and DSP code downloads are controlled by the host processor via path 820. Path 836 disposed between the host processor 818 and the packet engine 834 is operable carry appropriate ATM Adaptation Layer (AAL) connection information for voice packets. In addition, the state detector/generator 812 communicates with the host processor 818 via path 838 with respect to the CAS information.

In a preferred exemplary embodiment of the present invention, the host processor 818 is provided with an optional signaling path 822 for establishing communication with a call server via an Ethernet port 824. The call server (not shown in this FIG.) may be deployed in a call server network and can comprise a multimedia-capable softswitch to support next-generation network (NGN) services. Signaling information with respect to packet flow is provided to the packet engine 834 by the host processor 818 via path 832.

A packet bus interface 840 is coupled to the packet engine 834 for transporting the aggregated packet flow over a suitable bus 842 connected to the broadband slot 802. In an exemplary embodiment, the bus 842 may be comprised of a proprietary bus such as Cell Bus disclosed in U.S. Patent No. 6,091,729 to Dove, which patent is incorporated by reference herein. In a further exemplary embodiment, buses 806 and 842 may be integrated into a single bus structure operable to carry both TDM and ATM/packet information.

The gateway resource card 800A is also provided with an interface 830 that is coupled to the broadband slot 802 via a bus 844 for providing connectivity to the node's XCF (not shown). The host processor 818 is coupled to the interface 830 via path 828, whereby code downloads to the host processor (upgrades, maintenance, etc.) are effectuated. In addition, the path 828 is also utilized for establishing signaling between XCF and the host processor 818.

The access gateway resource card 800A utilizes applicable gateway signaling protocols such as, e.g., MEGACO, to communicate with the call server. Also, as alluded to hereinabove, applicable adaptation layers (e.g., AAL1-AAL5, etc.) are operable with the gateway resource card for transporting the packets. In addition, a storage block comprising suitable memory modules 819 (e.g., nonvolatile memory) is interfaced with the host processor 818, which storage block is operable to provide service resource functionality, e.g., call/message announcements and the like, traditionally associated with a Class 5 switch. Accordingly, it should be appreciated that the combination of an access network terminal with the integrated gateway resource functionality of the present invention can replace an entire Class 5 switch in the provisioning of a next-generation network.

Since the concentration is done at the resource card level, the gateway functionality is presented to all subscriber access lines that are configured for gateway access. In this partitioning model, the connections between the inbound channels and the channels supported by the gateway card's packet processing functionality are preferably nailed up through the access node. Accordingly, a DS0 cross-connect is included to interface the inbound channels with the available channels supported by the processing array 814. Furthermore, signaling detection must be done by the gateway's state detection block 812 on all inbound channels to pick up appropriate connect requests. Because of the nailed-up connection (i.e., static connection), the gateway resource card 800A does not have to communicate with the access node's XCF processor. However, this arrangement may not allow a scalable gateway architecture wherein multiple resource cards need to be implemented.

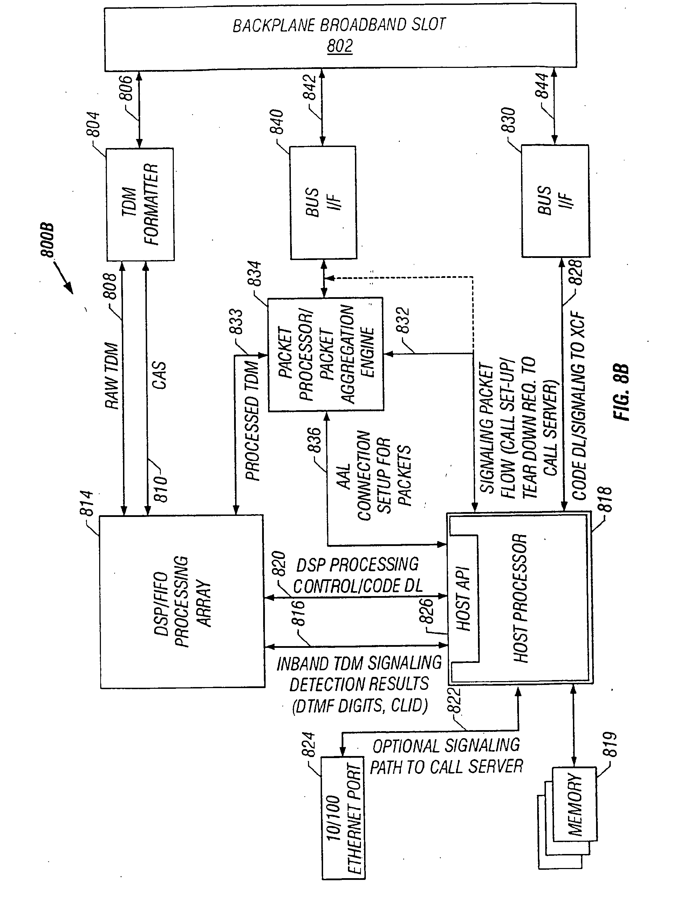

FIG. 8B depicts a high level functional block diagram of another exemplary embodiment of the gateway resource card 800B provided in accordance with the teachings of the present invention. It should be readily apparent upon taking reference hereto that the gateway resource card 800B is essentially similar to the resource card embodiment 800A described in detail hereinabove. In the partitioning model supported by the gateway resource card 800B, concentration is done in the access node's XCF rather than at the gateway level, however. Accordingly, only active calls are presented to the gateway resource card 800B over the STS bus 806. As a consequence, there is no separate state detector block needed in this exemplary embodiment, and the CAS information necessary with respect to setting up packet connections is directly provided to the signal processing array 814 via path 810. The gateway card embodiment 800B is thus operable to collect signaling from an active channel once the call is connected to the gateway by the access node's XCF.

Those skilled in the art should recognize that no separate DS0 cross-connect is required within the gateway card embodiment 800B. Signaling monitoring functionality is advantageously partitioned such that the gateway is operable to monitor only the active channels, whereas the access node's XCF and associated line cards monitor inactive channels configured for gateway access. This necessitates a messaging link for transmitting signals between the gateway card and the node's XCF (similar to GR.303), which is realized via signal path 828. Also, since connections between the gateway card 800B and the nodal XCF are established dynamically, real-time capacity is required with respect to the associated XCF processor. On the other hand, the partitioning model supported by the exemplary gateway card embodiment 800B is scalable to accommodate multiple gateway resource card architectures, wherein calls can be routed to any resource card depending upon availability.

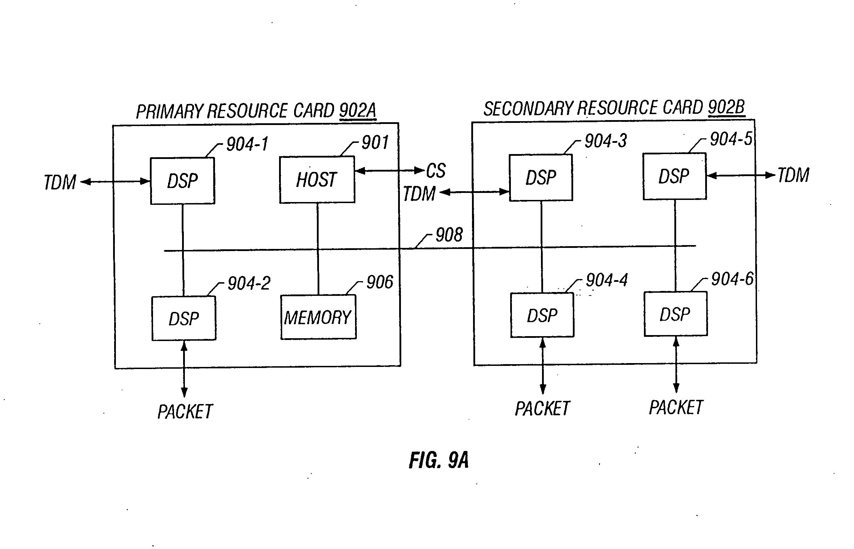

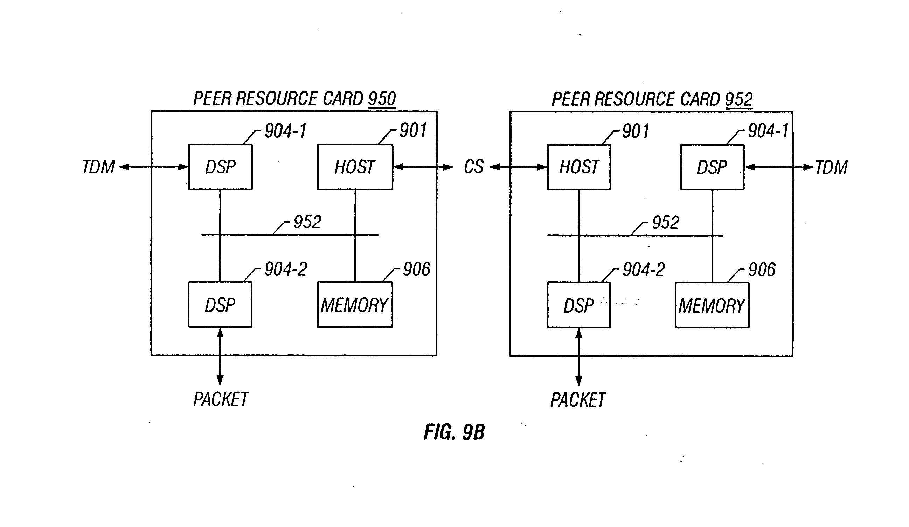

Referring now to FIGS. 9A and 9B, depicted therein are two exemplary integrated access media gateway systems operable in an access network element in a multi-card architecture in accordance with the teachings of the present invention. In the embodiment depicted in FIG. 9A, only one host processor 901 disposed on a primary resource card 902A is provided for the AMG system. The primary resource card 902A also includes memory 906 and one or more DSPs, e.g., DSP 904-1 and DSP 904-2. A high-speed, low latency bus 908 couples the primary resource card 902A to one or more secondary resource cards (e.g., resource card 902B) having a plurality of additional DSPs 904-3 to 904-6. Each of the DSPs on the primary as well as the secondary cards is provided with an appropriate network interface. The host processor 901 manages all the DSPs in the AMG system and is interfaced to a call server (CS).

In the exemplary AMG embodiment shown in FIG. 9B, each resource card is provided with a separate host processor, memory and a signal processing assembly (e.g., DSP assembly) associated therewith. The host processor manages only the DSP assembly it is associated with. Accordingly, each resource card is operable as a peer resource card. Two exemplary peer resource cards 950, 952 are illustrated in this FIG., wherein a bus 952 couples the various blocks on each particular peer resource card. Again, the DSPs are provided with the necessary network interfaces and the host processors 901 are interfaced to the call server. There is no separate link disposed between the peers and, accordingly, each peer resource card works as an independent gateway.

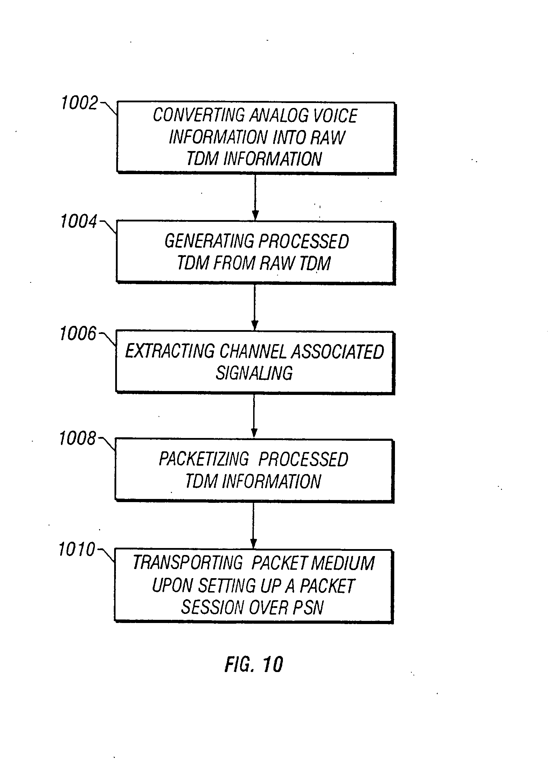

FIG. 10 is a flow chart of the various steps involved in an exemplary methodology for providing integrated access media gateway functionality between analog voice-over-TDM and voice-over-packet domains in accordance with the teachings of the present invention. Upon converting the analog voice information available on the inbound channels into raw TDM information (step 1002), a suitable signal processing array is operable to generate processed TDM information based on the raw TDM stream (step 1004). Optionally, the CAS information relating to the inbound channel traffic is extracted from the TDM stream (step 1006), depending on the concentration partitioning as described hereinabove. Thereafter, the processed TDM information is packetized and aggregated into a suitable transport medium under a host processor's control (step 1008). The packaged packet information is transported via a suitable packet interface upon setting up a packet session over the PSN pursuant to control signaling information provided by a call server (step 1010).

Based upon the foregoing Detailed Description, it should be readily apparent that the present invention advantageously provides an innovative and efficient solution for supporting gateway functionality in a scalable architecture which allows a network operator to incrementally add the requisite AMG functions as the demand for packet-based NGN service infrastructure grows. Since only gateway resource cards need to be added to the legacy equipment, no new network elements are required. Accordingly, the network operators can realize a smooth transition from the existing TDM network infrastructure to a packet-based network infrastructure. Furthermore, the provisioning of gateway services in accordance with the teachings of the present invention advantageously affords a cost-effective business model which spreads the risk factors associated with network upgrading on a broader horizon.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

## Claims

1. A system, comprising:
means for providing signaling functionality operable to replace a first network connection operating in a first network domain with a second network connection operating in a second network domain, said means for providing signaling functionality operating in conjunction with a signaling protocol effectuated via a softswitch; and
media conversion means operating to convert between a first network medium and a second network medium, said first network medium operating with said first network domain and second network medium operating with said network domain,
wherein said means for providing signaling functionality and said media conversion means are integrated into a broadband resource card disposed in an access network node.

2. The system as set forth in claim 1, wherein said means for providing signaling functionality is operable responsive to a call server coupled to said access network node.

3. The system as set forth in claim 1, wherein said first network domain comprises a circuit-switched network.

4. The system as set forth in claim 1, wherein said first network domain comprises a packet-switched network.

5. The system as set forth in claim 1, wherein said second network domain comprises a circuit-switched network.

6. The system as set forth in claim 1, wherein said second network domain comprises a packet-switched network.

7. The system as set forth in claim 1, wherein said first network domain comprises a network portion selected from the group consisting of a TDM network, an ATM network and an IP network.

8. The system as set forth in claim 1, wherein said second network domain comprises a network portion selected from the group consisting of a TDM network, an ATM network and an IP network.

9. An integrated access media gateway system operable in conjunction with an access network element, comprising:
a formatter interface for generating raw time-division multiplexed (TDM) information based on analog voice information received in a plurality of channels over a bus;
a signal processing assembly operably coupled to said formatter interface for processing said raw TDM information into processed TDM information; and
a packet engine operating responsive at least in part to a host processor for packetizing said processed TDM information into a plurality of packets, said host processor providing control signaling information for setting up at least one packet-switched session based on channel associated signaling relating to said plurality of channels, wherein said packet engine operates to aggregate said packets into a transport medium operable with a packet-switched network (PSN) through a packet interface.

10. The integrated access media gateway system operable in conjunction with an access network element as set forth in claim 9, wherein said PSN comprises an Internet Protocol (IP) network.

11. The integrated access media gateway system operable in conjunction with an access network element as set forth in claim 9, wherein said PSN comprises an Asynchronous Transfer Mode (ATM) network.

12. The integrated access media gateway system operable in conjunction with an access network element as set forth in claim 1, wherein said host processor includes an interface for communicating with a call server.

13. The integrated access media gateway system operable in conjunction with an access network element as set forth in claim 9, wherein said signal processing assembly comprises a digital signal processing (DSP) assembly.

14. The integrated access media gateway system operable in conjunction with an access network element as set forth in claim 13, wherein said DSP farm is partitioned among a plurality of network cards disposed in said access network element.

15. The integrated access media gateway system operable in conjunction with an access network element as set forth in claim 9, further comprising a storage block coupled to said host processor for storing media announcements.

16. A broadband resource card for providing integrated access media gateway functionality in an access network element, comprising:
means for providing raw time-division multiplexed (TDM) information based on information received in a first network medium operable with a first network domain;
means for processing said raw TDM information into processed TDM information; and
means operating responsive at least in part to a host processor for packetizing said processed TDM information into a plurality of packets, said host processor providing control signaling information for setting up at least one packet-switched session based on channel associated signaling relating to said plurality of channels, wherein said packet engine operates to aggregate said packets into a second network medium operable with a second network domain.

17. The broadband resource card for providing integrated access media gateway functionality in an access network element as set forth in claim 16, wherein said means for processing said raw TDM information comprises at least one digital signal processor.

18. The broadband resource card for providing integrated access media gateway functionality in an access network element as set forth in claim 16, wherein said means for processing said raw TDM information comprises at least one generic processor.

19. The broadband resource card for providing integrated access media gateway functionality in an access network element as set forth in claim 6, wherein said host processor includes an interface for communicating with a call server.

20. The broadband resource card for providing integrated access media gateway functionality in an access network element as set forth in claim 16, wherein said second network domain comprises an Internet Protocol (IP) network.

21. The broadband resource card for providing integrated access media gateway functionality in an access network element as set forth in claim 16, wherein said second network domain comprises an Asynchronous Transfer Mode (ATM) network.

22. The broadband resource card for providing integrated access media gateway functionality in an access network element as set forth in claim 16, further comprising a storage block coupled to said host processor for storing media announcements.

23. An access network element having integrated gateway functionality, comprising:
a formatter for converting information received in a plurality of channels in a first network medium operable with a first network domain into raw time-division multiplexed (TDM) information;
a signal processing array operably coupled to said formatter for processing said raw TDM information into processed TDM information; and
a packet engine operating responsive at least in part to a host processor disposed on said broadband resource card for packetizing said processed TDM. information into a plurality of packets, said host processor providing control signaling information for setting up at least one packet-switched session based on channel associated signaling relating to said plurality of channels, wherein said packet engine operates to aggregate said packets into a second network medium operable with a second network domain.

24. The access network element having integrated gateway functionality as set forth in claim 23, wherein said signal processing array comprises a plurality of digital signal processors (DSPs).

25. The access network element having integrated gateway functionality as set forth in claim 24, wherein at least a portion of said DSPs are partitioned into a secondary resource card having a common bus connection with said host processor.

26. The access network element having integrated gateway functionality as set forth in claim 23, further comprising a storage block coupled to said host processor for storing media announcements.
